# FASCICULE DE BREVET EUROPEEN

(11) **EP 1 142 293 B1**
(45) Date de publication et mention de la délivrance du brevet: **08.03.2006**
(21) Numéro de dépôt: 99959498.9
(22) Date de dépôt: 17.12.1999
(51) Int. Cl.: H04M 11/08, H04H 1/00, H04N 7/173

(54) **INTERACTIVITE D'UN DISPOSITIF RADIOTELEPHONIQUE ET D'UN TERMINAL RECEPTEUR AVEC UN SERVEUR DE DONNEES**
WECHSELWIRKUNG EINER FUNKTELEFONEINRICHTUNG UND EINES EMPFÄNGERS MIT EINEM DATENSERVER
INTERACTIVITY BETWEEN A RADIO TELEPHONE DEVICE AND A RECEIVER TERMINAL WITH DATA SERVER

(30) Priorité: 31.12.1998 FR 9816732
(43) Date de publication de la demande: 10.10.2001
(73) Titulaire: FRANCE TELECOM, 75015 Paris (FR); TELEDIFFUSION DE FRANCE, 75015 Paris (FR)
(72) Inventeur: MARTINIERE, Jean-Pierre, F-35340 Liffre (FR)
(74) Mandataire: Cabinet Martinet & Lapoux
(86) Numéro de dépôt international: PCT/FR1999/003195
(87) Numéro de publication internationale: WO 2000/041385

(56) Documents cités:
- EP-A- 0 804 012
- WO-A-98/17064
- WO-A-98/36552
- WO-A-98/57482
- DE-A- 4 342 776
- GB-A- 2 313 981

## Description

La présente invention concerne la consultation de services multimédia au moyen d'un dispositif de type radiotéléphone mobile et d'un terminal récepteur

Actuellement, un terminal radiotéléphonique est un outil personnel qui permet d'interroger n'importe quel terminal téléphonique et la plupart des serveurs de données de service. Toutefois, à cause de sa portabilité, il n'offre pas l'étendue d'affichage nécessaire pour visualiser des pages par exemple lors de la consultation d'une base de données ou d'un site Web à travers le réseau Internet.

Par ailleurs, la plupart des abonnés au réseau téléphonique commuté possèdent ou ont à disposition un ou plusieurs terminaux récepteurs desservis par des réseaux de diffusion par définition monodirectionnels, qui sont répartis par exemple à leurs domiciles, dans leurs automobiles, dans leurs lieux de travail, et dans des lieux publics.

La demande de brevet européen EP-A-0804012 décrit la réception de programmes multimédia par un terminal récepteur, tel qu'un récepteur de télévision ou un ordinateur portable muni d'un mini-récepteur DAB, relié à un dispositif radiotéléphonique mobile tel qu'un radiotéléphone GSM ou sans fil DECT. Une liste de programmes multimédia et d'applications est affichée sur l'écran du terminal récepteur et l'usager choisit le programme au moyen d'une télécommande. En particulier, le récepteur comprend un agent (logiciel) qui vérifie, lorsque le programme sélectionné n'est pas déjà mémorisé dans le récepteur, que la ressource de mémoire disponible dans le récepteur est suffisante pour recevoir le programme sélectionné et que l'usager a les droits nécessaires pour utiliser le programme sélectionné. Le terminal radiotéléphonique permet, par l'intermédiaire de transmission en messages courts (SMS), de dialoguer avec le système de transmission de programme multimédia notamment pour sélectionner le canal de transmission le plus avantageux par exemple en terme de coût ou de qualité afin de charger le programme diffusé par le réseau au format MPEG ou DAB.

La demande de brevet britannique GB-A-2313981 concerne un ordinateur personnel comprenant une interface bidirectionnelle GSM et une interface de réception DAB reliées respectivement à une interface de réseau téléphonique et une interface DAB d'un point d'accès ISP (provider) du réseau Internet à travers un réseau de radiotéléphonie et le réseau téléphonique commuté public, et à travers un réseau de diffusion DAB. Des commandes sont transmises à travers les interfaces de téléphonie pour transmettre des informations à travers les interfaces DAB.

La présente invention vise à réunir les fonctionnalités et la voie "montante", dite voie de retour, d'un dispositif de type radiotéléphone mobile, et les avantages de l'affichage et la voie "descendante" liés à un terminal récepteur en un "équipement" interactif avec des serveurs de données interrogeables par le dispositif et affichant leurs pages ou documents dans le terminal récepteur.

A cette fin, un procédé d'interactivité entre d'une part un dispositif radiotéléphonique mobile et un terminal récepteur et d'autre part un serveur de données, à travers un réseau de télécommunication qui dessert un réseau de radiotéléphonie incluant le dispositif radiotéléphonique, un serveur d'accueil d'un réseau de diffusion incluant respectivement le terminal récepteur, et le serveur de données, est caractérisé par les étapes suivantes :
- fournir un moyen de gestion desservi par le réseau de télécommunication pour établir des communications entre le dispositif radiotéléphonique, le terminal récepteur et le serveur de données,
- incorporer dans le terminal récepteur un moyen pour détecter un identifiant du terminal récepteur diffusé par le réseau de diffusion et pour reconnaître des données diffusées avec l'identifiant,
- appeler le moyen de gestion depuis le dispositif radiotéléphonique afin d'établir une communication entre ceux-ci,
- appeler le serveur d'accueil depuis le moyen de gestion, afin d'établir une communication entre ceux-ci et de diffuser l'identifiant du terminal récepteur, et
- appeler le serveur de données depuis le moyen de gestion afin d'établir une communication entre ceux-ci et l'abouter aux deux communications établies précédemment et afin de transmettre des données depuis le serveur de données vers le terminal récepteur.

Selon l'invention, le dispositif radiotéléphonique et le terminal récepteur constituent ensemble un "équipement" entièrement interactif pour accéder à n'importe quel serveur de données.

Le moyen de gestion selon l'invention qui est de préférence un serveur de gestion relié à l'enregistreur de localisation nominal du réseau de radiotéléphonie, ou qui peut être multiplié en plusieurs serveurs de gestion reliés aux enregistreurs de localisation des visiteurs du réseau de radiotéléphone, est une "plaque-tournante" entre les trois entités principales mises en interaction par l'invention, le dispositif radiotéléphonique, le terminal récepteur et le serveur de données. Le moyen de gestion "banalise" ainsi un terminal récepteur pas interactif, ou peu interactif, pour qu'il apporte des facilités principalement d'affichage à un petit dispositif radiotéléphonique portable. Par exemple, le dispositif coopère avec un récepteur de télévision domestique, ou un récepteur de guidage dans une automobile, pour consulter un service Internet.

En outre, lors d'une demande de consultation de service, l'abonné n'a pas avantageusement à s'identifier manuellement depuis ledit dispositif.

Selon une réalisation simple, le terminal récepteur est désigné par exemple par l'intermédiaire d'un clavier ou d'un écran ou d'un moyen de reconnaissance vocale dans le dispositif radiotéléphonique. Dans cette réalisation, après-l'établissement de la communication entre le dispositif radiotéléphonique et le moyen de gestion, l'identifiant du terminal récepteur et une adresse du serveur d'accueil sont composés dans le dispositif radiotéléphonique et sont transmis au moyen de gestion.

Selon une autre réalisation, le moyen de gestion fait correspondre à l'identifiant du terminal récepteur l'adresse d'un serveur d'accueil prédéterminé lors de l'abonnement de l'abonné possesseur du dispositif. Dans cette réalisation, après l'établissement de la communication entre le dispositif radiotéléphonique et le moyen de gestion, l'identifiant du terminal récepteur est composé dans le dispositif radiotéléphonique et transmis au moyen de gestion, et le moyen de gestion lit en mémoire une adresse du serveur d'accueil en réponse à l'identifiant afin d'appeler le serveur d'accueil en lui transmettant l'adresse et l'identifiant.

L'identifiant ainsi transmis par le moyen de gestion sous la commande du dispositif radiotéléphonique peut être diffusé vers le terminal récepteur afin d'autoriser à distance le fonctionnement du terminal récepteur, et ainsi interdire l'usage du terminal récepteur tant que le terminal récepteur n'a pas détecté son identifiant. Par exemple, lorsque le terminal récepteur, tel qu'un récepteur de radiodiffusion numérique, est installé dans un véhicule, celui-ci ne pourra fonctionner, c'est-à-dire être "réveillé" ou "déverrouillé", que lorsqu'il a détecté son identifiant ce qui empêche l'utilisation du terminal récepteur par toute personne malintentionnée, notamment en cas de vol du véhicule.

Selon une autre réalisation, le terminal récepteur est sélectionné parmi plusieurs terminaux récepteurs de l'abonné ou mis à la disposition de l'abonné. Après l'établissement d'une communication entre le dispositif radiotéléphonique et le moyen de gestion, le procédé peut comprendre une étape de désigner le terminal récepteur parmi plusieurs terminaux récepteurs depuis le dispositif radiotéléphonique au moyen de gestion.

Plus précisément, le procédé comprend alors les étapes de préalablement mémoriser une liste de mots, tels que noms ou numéros, représentatifs des terminaux récepteurs dans le dispositif radiotéléphonique, préalablement mémoriser les mots représentatifs en correspondance respectivement avec des adresses des serveurs d'accueil et des identifiants des terminaux récepteurs dans le moyen de gestion, et lors de l'étape de désigner, désigner le mot représentatif du terminal récepteur dans la liste mémorisée dans le dispositif radiotéléphonique, transmettre le mot représentatif du terminal récepteur désigné depuis le dispositif radiotéléphonique, et lire l'adresse du serveur d'accueil et l'identifiant relatifs au terminal récepteur désigné dans le moyen de gestion en réponse au mot représentatif transmis. La désignation du terminal peut comprendre une sélection du mot représentatif du terminal récepteur à désigner dans la liste des mots représentatifs de terminaux récepteurs affichée dans le dispositif radiotéléphonique, ou une sollicitation d'une touche du dispositif radiotéléphonique associée au terminal récepteur à désigner.

Selon une variante, le procédé comprend alors les étapes de :
- préalablement mémoriser une liste de mots représentatifs des terminaux récepteurs en correspondance respectivement avec des adresses des serveurs d'accueil et des identifiants des terminaux récepteurs dans le moyen de gestion, et
- lors de l'étape de désigner, transmettre la liste des mots représentatifs depuis le serveur de gestion vers le dispositif radiotéléphonique, désigner le mot représentatif du terminal récepteur dans la liste des mots représentatifs affichée dans le dispositif radiotéléphonique, transmettre le mot représentatif du terminal récepteur désigné depuis le dispositif radiotéléphonique, et lire l'adresse du serveur d'accueil et l'identifiant relatifs au terminal récepteur désigné dans le moyen de gestion en réponse au mot représentatif transmis.

Lorsque l'abonné souhaite recevoir par exemple un programme télévisé vers plusieurs terminaux récepteurs, tels que postes de télévision répartis dans son domicile, ledit terminal récepteur dans les caractéristiques précédentes du procédé est remplacé par un groupe de terminaux récepteurs vers lesquels des identifiants respectifs sont diffusés après l'étape d'appeler le serveur d'accueil, et des données sont transmises depuis le serveur de données vers les terminaux récepteurs du groupe après l'étape d'appeler le serveur de données.

Selon une réalisation simple, le serveur de données est désigné par exemple par l'intermédiaire d'un clavier ou d'un écran ou d'un moyen de reconnaissance vocale, dans le dispositif radiotéléphonique. Dans cette réalisation, après l'établissement de la communication entre le dispositif radiotéléphonique et le moyen de gestion, une adresse du serveur de données est composée dans le dispositif radiotéléphonique et transmise au moyen de gestion afin d'appeler le serveur de données.

Selon une autre réalisation, le serveur de données est sélectionné parmi une liste de serveurs de données par exemple composée lors de l'abonnement au service particulier relatif à l'invention, ou imposée par le moyen de gestion. Après l'établissement d'une communication entre le moyen de gestion et le serveur d'accueil, le procédé peut comprendre une étape de désigner le serveur de données parmi une pluralité de serveurs de données prédéterminés depuis le dispositif radiotéléphonique au moyen de gestion.

Plus précisément, le procédé comprend alors les étapes de :
- préalablement mémoriser des mots, tels que noms ou numéros, représentatifs des serveurs de données en correspondance respectivement avec des adresses des serveurs de données dans le moyen de gestion, et
- pour l'étape de désigner le serveur de données, diffuser la liste des mots représentatifs des serveurs de données depuis le serveur de gestion vers le terminal récepteur, afficher cette liste de mots dans le terminal récepteur et désigner le mot représentatif du serveur de données dans la liste affichée depuis le dispositif radiotéléphonique au moyen de gestion.

Selon un autre aspect de l'invention, un moyen de désignation/sélection, du type souris ou joystick, par exemple, est inclus dans le dispositif radiotéléphonique afin que l'abonné désigne et sélectionne avec un index du moyen désignation/sélection notamment un serveur de données et des objets dans les pages et documents transmis par celui-ci sur l'écran du terminal récepteur désigné.

Selon une première réalisation, après la diffusion de l'identifiant du terminal récepteur, le déplacement d'un index d'un moyen de désignation/sélection inclus dans le dispositif radiotéléphonique est transmis depuis le dispositif radiotéléphonique au terminal récepteur à travers le moyen de gestion, et une position de l'index validée dans le dispositif radiotéléphonique est transmise depuis le dispositif radiotéléphonique au serveur de données désigné à travers le moyen de gestion.

Selon une deuxième réalisation, après la diffusion de l'identifiant du terminal récepteur, le déplacement d'un index d'un moyen de désignation/sélection inclus dans le dispositif radiotéléphonique est transmis au terminal récepteur à travers une liaison bidirectionnelle entre le dispositif radiotéléphonique et le terminal récepteur, et une position de l'index validée dans le dispositif radiotéléphonique est transmise depuis le dispositif radiotéléphonique vers le serveur de données à travers le moyen de gestion.

En particulier, pour sélectionner un serveur de données dans une liste, une position de l'index validée sur le mot représentatif du serveur de données désigné dans la liste de mots affichée dans le terminal récepteur est transmise depuis le dispositif radiotéléphonique au moyen de gestion afin que le moyen de gestion établisse la communication avec le serveur de données désigné.

Bien souvent, le serveur de données est relié au réseau de télécommunication à travers un point d'accès et un réseau de transmission de données à débit élevé, comme le réseau Internet.

Le réseau de diffusion incluant le terminal récepteur peut être de l'un des types suivants : réseau de diffusion ou de distribution de signaux de télévision numériques, réseau de diffusion ou de distribution de signaux audionumériques, réseau de diffusion ou de distribution de signaux télématiques ou multimédia.

L'invention concerne également un système de télécommunication entre d'une part un dispositif radiotéléphonique mobile et un terminal récepteur et d'autre part un serveur de données comme sus-indiqué.

Le système comprend un moyen, de préférence amovible, tel qu'une carte à microprocesseur personnelle à l'abonné, ayant mémorisé notamment, outre des caractéristiques relatives à l'abonné comme pour un radiotéléphone connu, un mot de marquage et le transmettant lors d'un appel du moyen de gestion. Le moyen tel qu'une carte a mémorisé plusieurs mots représentatifs de terminaux récepteurs lorsque des terminaux récepteurs sont à désigner.

Le dispositif radiotéléphonique peut comprendre encore des touches de désignation d'un clavier ou d'un écran tactile respectivement associées à des terminaux récepteurs, une touche de désignation étant sollicitée pour valider la désignation du terminal récepteur associé au moyen de gestion.

Selon d'autres variantes, le dispositif radiotéléphonique comprend un clavier et/ou un écran et/ou un moyen de reconnaissance vocale, et/ou est relié à un terminal dans lequel les fonctionnalités d'un clavier et/ou d'un écran sont déportées pour ledit dispositif.

Selon encore une autre variante, le dispositif radiotéléphonique est intégré dans un terminal radiotéléphonique mobile connu.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de télécommunication pour relier au moins un dispositif radiotéléphonique de désignation et un terminal récepteur à travers un réseau de télécommunication ;
- la figure 2 est un bloc-diagramme schématique d'un terminal radiotéléphonique de désignation selon l'invention ; et
- la figure 3 est un algorithme du procédé d'interactivité selon l'invention.

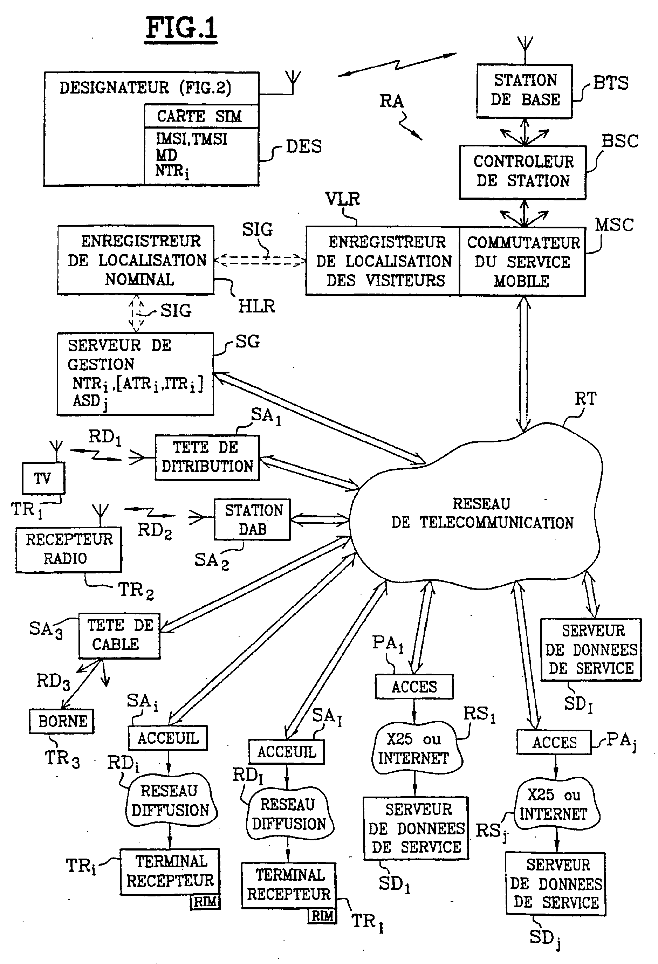

En référence à la figure 1, un abonné accède à des services multimédia depuis un dispositif radiotéléphonique de désignation portable et mobile DES au moins dédié au procédé d'interactivité de l'invention, appelé ci-après désignateur DES, au moyen d'un terminal récepteur TRᵢ prédéterminé ou désigné parmi plusieurs terminaux récepteurs TR₁ à TR_{I} de l'abonné localisés a priori à des endroits différents, i étant un entier compris entre 1 et I inférieur à 10 en général. Un réseau de télécommunication RT dessert essentiellement un réseau de radiotéléphonie cellulaire RA, par exemple de type GSM 900 ou DCS 1800, incluant le désignateur DES, un serveur de gestion SG ainsi qu'indirectement les terminaux récepteurs et directement et/ou indirectement des serveurs de données SD₁ à SD_{J} de fournisseurs de services et d'informations.

Le **réseau de télécommunication** RT comprend classiquement des autocommutateurs, dits commutateurs téléphoniques à autonomie d'acheminement, et des brasseurs pour acheminer des communications téléphoniques. Aux autocommutateurs sont rattachés directement, ou indirectement à travers des commutateurs téléphoniques locaux (non représentés), des commutateurs de service mobile MSC inclus dans le réseau de radiotéléphonie RA. Selon les types de liaison, des autocommutateurs et des brasseurs dans le réseau RT sont reliés à travers des points d'accès ou passerelle PAⱼ et des serveurs d'accueil SAᵢ à d'autres réseaux RDᵢ, RSⱼ dans lesquels sont inclus la plupart des serveurs de données SDⱼ et les terminaux récepteurs TRᵢ comme cela sera détaillé dans la suite.

Plus généralement, le réseau de télécommunication RT est un réseau de transport entre les accès aux trois types d'entités principales DES, TR₁ à TR_{I} et SD₁ à SD_{J} mises en oeuvre par le procédé d'interactivité selon l'invention. En fonction des besoins en trafic, le réseau RT comprend en partie le réseau téléphonique commuté public, et/ou un réseau numérique à intégration de services RNIS, et/ou un réseau par paquets selon la norme X.25 par exemple, et/ou un réseau de transfert asynchrone ATM.

Afin de mieux percevoir- les apports de l'invention, il est rappelé brièvement l'architecture d'un **réseau de radiotéléphonie cellulaire RA.** Dans ce réseau, un commutateur du service mobile MSC est relié au réseau téléphonique commuté public RT et assigné à une zone de localisation respective. Un commutateur MSC gère principalement des communications pour des terminaux mobiles, tels que des terminaux radiotéléphoniques classiques et des désignateurs DES de l'invention, qui sont à un instant- donné dans la zone de localisation, et la mobilité des terminaux mobiles lors du transfert vers ou depuis la zone de localisation et depuis ou vers une autre zone de localisation rattachée à un autre commutateur de service mobile. Le commutateur MSC est relié à un ou plusieurs contrôleurs de station de base BSC qui gèrent chacun une ou plusieurs stations de base radio BTS, c'est-à-dire contrôlent principalement les puissances d'émission des terminaux mobiles et l'allocation de canaux aux terminaux mobiles. Chaque station "multiplexe" les canaux de trafic montants depuis les terminaux mobiles et "démultiplexe" les canaux de trafic descendants vers ceux-ci.

Le réseau de radiotéléphonie RA comprend encore un enregistreur de localisation nominal HLR et plusieurs enregistreurs de localisation de visiteurs VLR. L'enregistreur de localisation nominal HLR mémorise les caractéristiques de chaque abonné dont certaines sont également mémorisées dans un module d'identité SIM possédé par l'abonné et inclus dans un terminal mobile. Ces caractéristiques sont notamment un identificateur d'abonné IMSI, un numéro d'appel d'abonné MSISDN, d'autres numéros de routage d'abonné, et un profil d'abonnement de l'abonné. En l'occurrence, un mot de marquage de désignation MD indiquant que l'abonné a souscrit à un service de désignation selon l'invention, et des numéros NTR₁ à NTR_{I} de terminaux récepteurs personnels TR₁ à TR_{I} sont inscrits dans l'enregistreur HLR. L'enregistreur de localisation de visiteurs VLR est une base de données qui ne mémorise que les caractéristiques des terminaux mobiles se trouvant à un instant donné dans la(les) zone(s) de localisation couverte(s) par le(les) commutateur(s) MSC relié(s) à l'enregistreur VLR. Un seul commutateur MSC est supposé associé à l'enregistreur VLR dans la figure 1. Dans l'enregistreur de localisation nominal HLR, à chaque terminal mobile est associée l'adresse de l'enregistreur de localisation VLR afin que l'enregistreur HLR signale à tout instant la position de chaque terminal mobile, particulièrement lors de l'établissement d'une communication d'arrivée provenant du réseau de télécommunication RT. Les commutateurs MSC échangent des signaux avec les enregistreurs VLR et l'enregistreur HLR à travers un réseau de signalisation SIG par canal sémaphore inclus dans le réseau de radiotéléphonie et relié au réseau de signalisation du réseau de télécommunication RT.

Le **serveur de gestion** SG est associé à l'enregistreur de localisation nominal VLR, ou peut être fusionné avec celui-ci, et est relié aux commutateurs MSC et aux enregistreurs VLR à travers le réseau de signalisation SIG. Il est desservi par autocommutateur, ou par brasseur et liaison spécialisée de type RNIS ou X.25 du réseau RT. Le serveur de gestion SG identifie l'abonné par le numéro d'identité IMSI à travers l'enregistreur HLR, reconnaît le désignateur DES par le mot de marquage de désignation MD, mémorise au moins une adresse d'accès ATRᵢ et un identifiant ITRᵢ d'un terminal récepteur dédié à un abonné, et plus généralement une table de terminaux récepteurs pour faire correspondre des numéros (ou noms) abrégés NTRᵢ de terminaux récepteurs pour chaque abonné à des adresses d'accès ATRᵢ et identifiants ITRᵢ de terminaux récepteurs ou pour faire correspondre un nom de groupe à une adresse d'accès ATRᵢ et aux identifiants des terminaux récepteurs dans ce groupe, et contient de préférence une table de serveurs de données pour faire correspondre un identificateur d'abonné ou un numéro de terminal récepteur à un serveur de données ou plusieurs serveurs de données. Le serveur de gestion SG confirme dynamiquement la désignation d'un terminal récepteur par le désignateur DES puis la demande d'un service d'un serveur de données désigné par le désignateur, et interprète des commandes et choix de l'abonné transmises par le désignateur pour les retransmettre après adaptation vers le serveur de données désigné et vers le terminal récepteur désigné ou le groupe désigné de terminaux récepteurs.

Le serveur de gestion participe à l'établissement de communications entre les trois autres entités mises en oeuvre par l'invention, le désignateur, un terminal récepteur désigné et un serveur de données de service désigné.

En outre, l'opérateur administrant le serveur de gestion a la possibilité de télécharger des fonctions ou des applications informatiques dans le désignateur à travers les réseaux RT et RA.

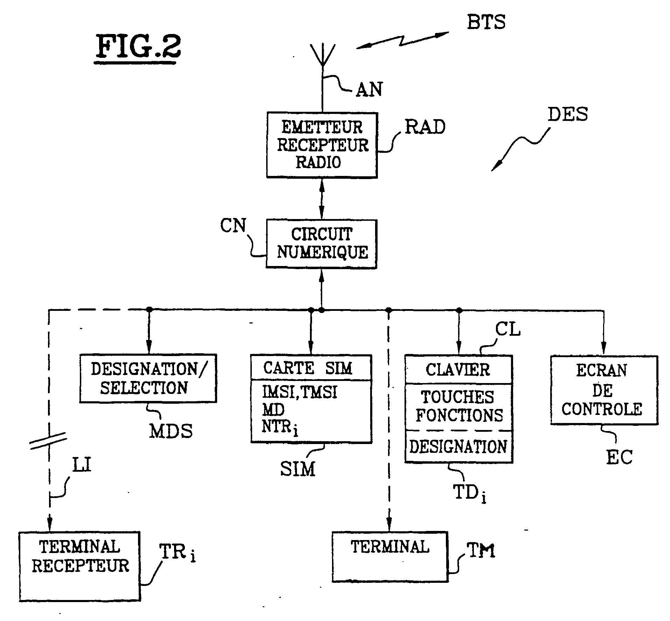

En référence à la figure 2, un dispositif radiotéléphonique, dit **désignateur** DES, est, selon une première réalisation préférée de l'invention, un terminal radiotéléphonique portable et mobile simplifié sans circuit de codage/décodage de voix et sans possibilité d'être appelé d'une manière transparente pour l'abonné possédant le désignateur. Le désignateur comprend un module émetteur et récepteur à radiofréquence RAD avec une antenne AN, et un circuit numérique CN organisé autour d'un microcontrôleur avec mémoires ROM et RAM, circuits d'horloge et interface homme-machine. Cette dernière interface dessert un module d'identification d'abonné SIM (Subscriber Identify Module) personnel à l'abonné, un clavier CL avec des touches alphanumériques ou un moyen de reconnaissance de parole pour composer des numéros téléphoniques et des numéros et mots d'instructions et de répertoires, des touches fonctionnelles connues et éventuellement une ou plusieurs touches de désignation TD₁ à TD_{I} rapportées par l'invention pour désigner respectivement un ou plusieurs terminaux récepteurs TR₁ à TR_{I} ou groupes de terminaux récepteurs personnels de l'abonné, un moyen de désignation/sélection MDS pour désigner/sélectionner une zone réactive déterminée sur l'écran d'un terminal récepteur désigné, ou le cas échéant sur un écran EC du désignateur. Le moyen MDS peut comprendre au moins 4 touches fléchées ou une touche de navigation, comme montré à la figure 2, ou bien une souris ou un "track-ball", un joystick, une dalle tactile, ou un stylo de désignation. Optionnellement, le désignateur comprend encore un écran de contrôle EC qui peut être tactile, notamment pour remplacer les touches de désignation TD₁ à TD_{I}.

Le module SIM est une carte à microprocesseur amovible et contient des données relatives à l'abonné possesseur de ce module, telles que numéro d'identité d'abonné IMSI, numéro d'identité temporaire TMSI, code confidentiel pour accès sécurisé aux fonctionnalités du désignateur, etc., des caractéristiques liées au profil de l'abonnement au service de désignation, et des paramètres et données concernant l'authentification de la carte et des applications spécifiques aux communications téléphoniques. Selon l'invention, dans les caractéristiques liées à l'abonnement sont inclus le mot de marquage de désignation MD et un ou plusieurs numéros (ou noms) abrégés d'identification NTR₁ à NTR_{I} de terminaux récepteurs prédéterminés TR₁ à TR_{I} et/ou de groupe de terminaux récepteurs vers lesquels l'abonné souhaite le plus souvent transférer des informations des serveurs de données SD₁ à SD_{J}. Chaque fois qu'une interactivité est demandée, le désignateur transfert au serveur de gestion pour une communication de départ, le mot de marquage de désignation MD équivalent à un numéro d'appel téléphonique du serveur de gestion SG, le mot d'identité IMSI pour un premier appel ou le mot d'identité temporaire TMSI pour les appels suivants, sous la commande de l'enregistreur de localisation de visiteurs associé VLR. Chaque numéro NTRᵢ est associé à une touche de désignation respective TDᵢ, ou le cas échéant à un nom de terminal récepteur ou de groupe de terminaux récepteurs affichable sur l'écran EC. Le numéro (ou le nom) abrégé d'identification NTRᵢ est transféré sous la forme d'un mot représentatif du terminal récepteur désigné TRᵢ ou du groupe de terminaux récepteurs à travers le commutateur de service mobile MSC vers le serveur SG.

La liste des numéros abrégés de terminaux et/ou de groupe de terminaux prédéterminés NTR₁ à NTR_{I} avec leurs noms associés est écrite dans un sous-fichier en mémoire non-volatile EEPROM dans le module SIM lors de la pré- ou post-personnalisation du module SIM. Le moyen de désignation/sélection MDS sert le cas échéant à désigner l'un des noms des terminaux récepteurs ou groupes prédéterminés au serveur de gestion SG grâce à un menu affiché sur l'écran EC, et selon une réalisation préférée à désigner au serveur de gestion un serveur de données dans une liste affichée sur l'écran du terminal récepteur désigné et à pointer et valider tout choix sur cet écran. Le numéro NTRᵢ comprend une adresse de localisation de terminal récepteur ATRᵢ ou de groupe de terminaux récepteurs qui est le numéro d'appel d'un serveur d'accueil SAᵢ, tête ou station de distribution oudiffusion, reliant le terminal TRᵢ au réseau RAᵢ et un identifiant de terminal récepteur ITRᵢ équivalent à l'identificateur d'abonné IMSI.

Selon une autre variante, l'abonné compose lui-même au clavier CL le mot de marquage de désignation MD lié au serveur de gestion SG et le numéro ou le nom d'identification NTRᵢ du terminal récepteur désigné TRᵢ, ou bien un identifiant ITRᵢ d'un terminal récepteur TRᵢ prédéterminé ou désigné.

Toutefois, selon une réalisation simple, le désignateur DES peut n'être dédié qu'au procédé d'interactivité selon l'invention, et est restreint à l'accès d'un service particulier dispensé par un unique serveur de données pour désigner un film à acheter, ou un service audiovisuel pour des mesures d'audience par exemple, ou une course et un cheval, etc..., vers un unique terminal récepteur ou un unique groupe de terminaux récepteurs, par exemple des postes de télévision TR₁ répartis au domicile de l'abonné. Le désignateur est alors équivalent à une "zapette interactive" et sert essentiellement comme moyen d'expression de vote.

Selon les réalisations précédentes, le désignateur DES est totalement autonome, sans liaison avec un terminal récepteur désigné. L'interactivité du désignateur et d'un terminal récepteur désigné TRᵢ avec un serveur de données désigné SDᵢ est réalisée totalement par l'intermédiaire du serveur de gestion SG.

Selon une autre réalisation, l'interface homme-machine du circuit numérique CN dans le désignateur DES est reliée en local à au moins un terminal récepteur sélectionné TRᵢ par une liaison infrarouge, radio ou filiaire LI par exemple comme montré à la figure 2, pour transmettre la position variable d'index du moyen de désignation/sélection MDS au terminal récepteur désigné TRᵢ.

Selon encore une autre réalisation, le désignateur DES est plus complet et complètement intégré à un terminal radiotéléphonique mobile connu de type GSM 900 ou DCS 1800. Le terminal radiotéléphonique est quelque peu modifié dans son module SIM et le cas échéant au niveau du clavier CL afin que le désignateur DES utilise certaines fonctionnalités déjà disponibles dans le terminal radiotéléphonique mobile connu. Dans ce cas, la consultation d'un serveur de données par le désignateur "intégré" selon le procédé d'interactivité selon l'invention de préférence n'interdit pas les fonctionnalités téléphoniques initiales d'un terminal radiotéléphonique connu. La simultanéité des fonctionnalités de désignation et de téléphone est réalisée grâce à des paquets propres aux fonctions du désignateur et de faible débit intercalés entre des paquets de voix dans le canal de trafic assigné au terminal radiotéléphonique connu.

En variante, le désignateur DES est un terminal radiomobile de proximité conforme à la norme DECT (Digital European Cordless Telecommunications) et communique avec le réseau RT par l'intermédiaire d'une borne radio d'émission-réception fixe dans un réseau de radiotéléphonique local "sans cordon" selon la norme DECT.

Selon une autre variante, le désignateur DES communique avec la station de base BTS à travers une base desservant plusieurs désignateurs selon la norme DECT.

Selon encore une autre réalisation montrée à la figure 2, l'interface homme-machine du circuit numérique CN dans le désignateur DES est reliée à une prise périphérique qui est raccordable à la prise périphérique d'un terminal moderne TM, par exemple un terminal vidéotex évolué ou un micro-ordinateur portable. Les fonctionnalités du clavier, de l'écran, et éventuellement du lecteur de carte inclus dans le terminal moderne TM sont apportées au désignateur dans lequel le clavier CL est simplifié et l'écran EC est supprimé.

Un **serveur de données** SDⱼ, avec j un entier compris entre 1 et J de l'ordre de plusieurs dizaines ou centaines, est parfois relié directement au réseau de télécommunication RT, comme le serveur SD_{I} dans la figure 1, ou bien souvent relié au réseau de télécommunication RT à travers un point d'accès PAⱼ, comme illustré à la figure 1. Le point d'accès PAⱼ adapte des signaux échangés dans le réseau RT à des signaux échangés dans un réseau de transmission de données de services à haut débit RSⱼ et inversement. Selon un premier exemple, un point d'accès est un Point d'Accès Vidéotex PAVI qui dessert au moins un serveur de données à travers un réseau de commutation téléinformatique tel qu'un réseau de communication de paquets X.25. Selon un autre exemple, un point d'accès est un serveur de réseau d'accès donnant accès à travers le réseau numérique à haut débit INTERNET, à un serveur de données pouvant être un fournisseur de service (provider) ou bien un serveur de proximité (proxy). Par exemple, un serveur de données donne accès à une vidéothèque ou à une audiothèque, ou à diverses bases de données multimédia afin que le désignateur DES y sélectionne certaines informations, pages et documents, par exemple touristiques, météorologiques, bancaires, ou des listes de spectacles, de morceaux musicaux ou de films, un catalogue de produits à commander, des annuaires, des programmes de réunions hippiques avec la liste des chevaux dans chaque course, etc... et certaines opérations, telles que sélection/réservation de spectacle, film, produit, course/cheval,... programmation de l'heure de diffusion ou de plusieurs heures de diffusion en "CARROUSEL" ; mode de paiement à distance, etc..., qui sont visualisées sur l'écran du terminal récepteur désigné.

Un **terminal récepteur** TRᵢ est, au sens de l'invention, un terminal ne pouvant que recevoir des données, par exemple du texte et/ou des images fixes ou animées et/ou des messages audio. Comme montré à la figure 1, le terminal récepteur TRᵢ est inclus dans un réseau de diffusion RDᵢ ayant un serveur d'accueil, tête ou station de réseau TRᵢ, ayant accès au réseau de télécommunication RT. Le serveur d'accueil SAᵢ peut être appelé au moyen d'une adresse ATRᵢ qui est par exemple composée avec un identifiant ITRᵢ du terminal récepteur TRᵢ dans le désignateur DES ou qui est lue dans le serveur de gestion SG en réponse à l'identifiant ITRᵢ transmis depuis le désignateur DES. Le serveur d'accueil SAᵢ est transparent aux identifiants ITRᵢ des terminaux récepteurs qu'il dessert et aux données telles qu'instructions, pages et documents, transmises par le serveur de données désigné, diffusées avec les identifiants et destinées respectivement aux terminaux récepteurs. Plusieurs terminaux récepteurs ayant des identifiants ITRᵢ différents peuvent être réunis en un groupe dont l'adresse comprend l'adresse ATRᵢ du serveur d'accueil commun et la liste des identifiants afin de leur diffuser des données communes. En général, lorsque le serveur d'accueil SAᵢ est appelé depuis le serveur de gestion SG, il diffuse l'identifiant ITRᵢ du terminal récepteur concerné TRᵢ accompagné d'une page d'accueil.

Un terminal récepteur peut être à titre d'exemple :
- un poste de réception de signaux de télévision numériques personnalisé TR₁, ou un récepteur de télévision classique relié à un décodeur numérique personnalisé, qui est desservi par un réseau de vidéotransmission câblé ou par satellite RD₁, lequel peut être accessible par une station frontale SA₁ éventuellement reliée par réseau ATM au réseau RT ; ou
- un récepteur de radiodiffusion numérique personnalisé TR₂ logé dans un véhicule, doté d'un écran et d'un clavier, pouvant recevoir des messages audio, des pictogrammes, images et des textes, concernant notamment des informations météorologiques, routières ou touristiques, des consultations d'un serveur Internet, à travers un réseau de radiodiffusion numérique (Digital Audio Broadcasting) RD₂ et une station d'accueil, de diffusion et de collecte SA₂, pouvant également jouer le rôle de serveur de données de services ; ou encore
- une borne réceptrice TR₃ mise en libre service dans un lieu public ou sur le trottoir, reliée à un réseau de transmission à large bande RD₃ câblé ou de radiodiffusion de messages et/ou de consultation de banques de données télématiques ou multimédia notamment relatives à des informations municipales, locales ou régionales.

Chaque terminal récepteur TRᵢ contient selon l'invention un module d'identification RIM, par exemple sous la forme d'une carte à puce, équivalent aux moyens relatifs à la réception dans le module SIM du désignateur DES. En particulier, le module RIM contient un numéro d'identification personnel, dit identifiant de terminal récepteur ITRᵢ, et des moyens logiciels pour détecter dans les signaux que transmet le réseau de diffusion associé RDᵢ l'identifiant et des instructions qui lui sont propres, telles que mise en marche du terminal initialement en veille, paramètres de position de l'index correspondant au moyen de désignation/sélection MDS et déplaçable dans une page visualisée, enregistrement de signaux reçus ou conversion immédiate de signaux reçus en informations sur l'écran, etc.

Comme déjà dit, pour que le serveur de gestion SG et tout serveur de données SDᵢ communique avec le terminal récepteur prédéterminé ou désigné TRᵢ, ce dernier est associé à une adresse de localisation ATRᵢ qui est le numéro d'appel du serveur d'accueil SAᵢ du réseau de diffusion RDᵢ.

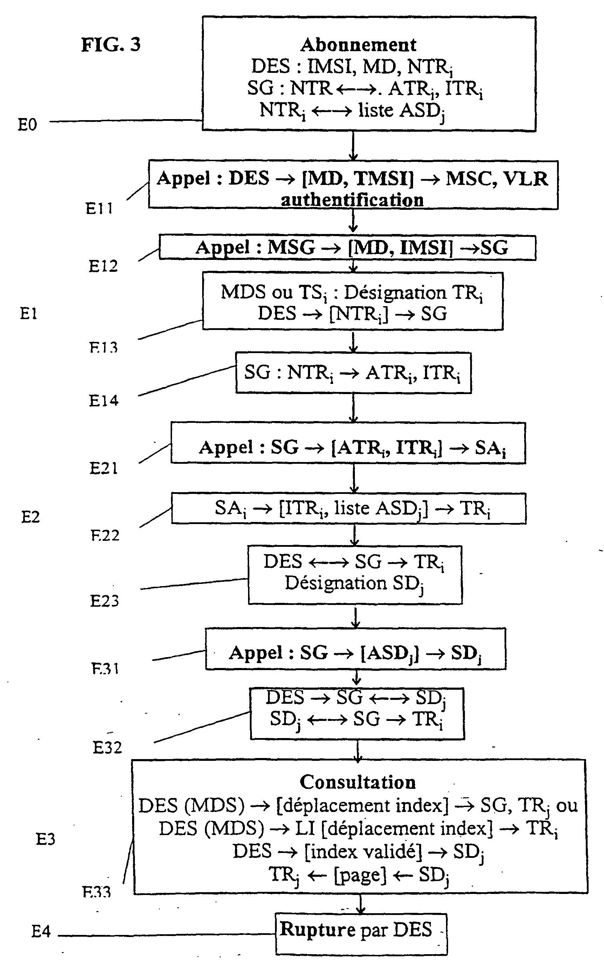

En référence maintenant à la figure 3, -le **procédé d'interactivité** selon l'invention pour l'architecture du système de télécommunication montré à la figure 1 et relativement à une réalisation préférée où un abonné avec un désignateur DES possède plus d'un terminal récepteur à connecter à un serveur de données à désigner parmi plusieurs, comprend une étape d'initialisation E0 et trois étapes principales E1 à E3 et une étape finale E4. Les réalisations simples avec un terminal récepteur ou un serveur de données, et les variantes du procédé de désignation seront déduites de la réalisation décrite.

Il sera supposé ci-après que le désignateur DES est à un instant donné dans la zone de couverture du commutateur de service mobile MSC- représenté à la figure 1 et à proximité d'un terminal récepteur TRᵢ à désigner.

**L'étape d'initialisation E0** consiste en la souscription de l'abonné au service de désignation de terminaux récepteurs, l'acquisition du désignateur DES avec une carte SIM pouvant déjà contenir notamment les noms et les numéros abrégés NTRᵢ des terminaux récepteurs personnels TRᵢ qu'a pré-désigné l'abonné, et la mémorisation des numéros NTRᵢ en correspondance avec les couples [ATRᵢ, ITRᵢ] dans le serveur de gestion SG, ou la mémorisation des identifiants ITRᵢ des terminaux personnels TRᵢ en correspondance avec des adresses ATRᵢ de serveurs d'accueil SAᵢ dans le serveur de gestion SG. Postérieurement, l'administrateur du service peut modifier une adresse de localisation ATRᵢ ou un identifiant ITRᵢ à la demande de l'abonné, lorsque le terminal récepteur correspondant est déplacé ou est changé. Le serveur de gestion contient une liste d'adresses ASDⱼ de serveurs de données SDⱼ qui sont accessibles à tous les terminaux récepteurs, ou associe respectivement des listes d'adresses de serveurs de données ASDⱼ aux terminaux récepteurs TRᵢ de l'abonné, ou plus simplement dédie pour l'abonné un terminal récepteur prédéterminé TRᵢ d'identifiant mémorisé ITRᵢ ou un groupe prédéterminé de terminaux récepteurs propres à recevoir des données d'un serveur de données unique, ou de quelques serveurs de données à désigner individuellement.

Dès la première communication demandée par le désignateur DES, l'enregistreur de localisation des visiteurs VLR relié au commutateur du service mobile MSC couvrant la zone de couverture où le désignateur DES est localisé, marque par réception du mot de désignation MD, l'identité de terminal radiotéléphonique en tant que désignateur et attribue à la place du numéro d'identité IMSI un numéro d'identité provisoire TMSI. A ce stade, en variante, les numéros NTRᵢ et noms et/ou identifiants ITRᵢ des terminaux récepteurs associés au numéro d'identité IMSI du désignateur DES sont téléchargés depuis le serveur de gestion SG dans la carte SIM du désignateur DES.

Les étapes principales E1 à E3 concernent successivement un appel du serveur de gestion SG depuis le désignateur pour établir une communication entre le désignateur DES et le serveur de gestion SG, et, selon la réalisation préférée, pour désigner l'un des terminaux récepteurs, un appel du serveur d'accueil SAᵢ du terminal TRᵢ depuis le serveur de gestion SG pour établir une communication entre le serveur d'accueil SAᵢ et le serveur de gestion et diffuser l'identifiant ITRᵢ du terminal dans le réseau RDᵢ et, selon la réalisation préférée, pour désigner l'un des serveurs de données, et un appel du serveur de données SDⱼ depuis le serveur de gestion SF pour établir dans le serveur de gestion SG une communication entre le désignateur et le serveur de données SDⱼ et une communication unidirectionnelle depuis le serveur de données SDⱼ vers le terminal récepteur TRᵢ afin que des données fournies par le serveur de données et transmises avec l'identifiant ITRᵢ depuis le serveur de gestion SG soient diffusées par le serveur d'accueil et reconnues par le terminal récepteur TRᵢ.

La première **étape principale E1** comprend des sous-étapes E11 à E14. Par sollicitation d'une touche de décrochage prédéterminée sur le clavier CL ou par sélection sur l'écran EC d'une zone réactive prédéterminée par le moyen MDS, l'abonné déclenche une demande d'appel sortant dans le désignateur DES qui transmet un message de demande de connexion au commutateur de rattachement MSC (sous-étape E11). En réponse au message de demande de connexion dans lequel sont encapsulées l'identité TMSI du désignateur DES et le mot MD, l'enregistreur VLR vérifie en mémoire qu'un mot de marquage de désignation MD est associé à l'identité TMSI afin que le commutateur MSC appelle le serveur de gestion SG ; sinon le commutateur MSC adresse un message de refus au désignateur DES et n'établit pas la communication demandée. Puis le commutateur MSC établit la connexion entre le désignateur DES et le serveur de gestion SG (sous-étape E12) et communique au serveur de gestion l'identité de l'abonné IMSI avec le mot de marquage de désignation MD.

Au cours des étapes suivantes, le serveur de gestion SG établit un dialogue avec le désignateur DES via les réseaux RA et RT de manière analogue à une communication entre un terminal radiotéléphonique mobile et un terminal téléphonique fixe. Le serveur SG demande au désignateur DES le numéro abrégé NTRᵢ d'un terminal récepteur TRᵢ (ou d'un groupe de terminaux) qu'a désigné l'abonné (sous-étape E13). L'abonné désigne le nom d'un terminal récepteur TRᵢ à désigner dans une liste déroulante mémorisée préalablement dans la carte SIM du désignateur DES, ou mémorisée préalablement dans le serveur de gestion SG et transmise au désignateur afin d'afficher la liste de noms de terminaux récepteurs sur l'écran de contrôle EC, désignation effectuée par l'intermédiaire du moyen de désignation/sélection MDS, ou en variante appuie sur la touche de désignation TDᵢ associée au terminal récepteur TRᵢ à désigner.

En réponse au numéro abrégé NTRᵢ transmis par le désignateur, le serveur de gestion SG lit le numéro d'appel de serveur d'accueil ATRᵢ localisant le terminal récepteur (ou le groupe de terminaux récepteurs) désigné et l'identifiant ITRᵢ du terminal (ou les identifiants des terminaux groupés) dans la table de terminaux récepteurs (sous-étape E14).

Lorsque l'abonné n'est associé qu'à un seul terminal récepteur ou un seul groupe de terminaux récepteurs dans le serveur de gestion, celui-ci est d'office désigné, et l'étape E13 est supprimée.

En variante, l'abonné a la possibilité de désigner lui-même un terminal récepteur, au lieu qu'il soit désigné dans une liste à l'étape E13. Par exemple, lorsque l'abonné se trouve devant la borne publique TR₃, l'abonné compose l'identifiant ITR₃ de la borne TR₃ et l'adresse ATR₃ de la tête de câble SA₃ dans le désignateur DES qui les transmet au serveur de gestion SG.

Selon une autre variante, l'identifiant ITRᵢ du terminal récepteur TRᵢ est composé au clavier ou lu en mémoire par sollicitation de la touche TDᵢ pour être transmis au serveur de gestion SG afin que celui-ci déduise l'adresse ATRᵢ du serveur d'accueil par lecture d'une mémoire de serveurs d'accueil en réponse à l'identifiant reçu ITRᵢ.

Puis à l'**étape E2**, le serveur de gestion SG établit à travers le réseau de télécommunication RT une communication avec le serveur d'accueil SAᵢ ayant pour adresse ATRᵢ et desservant le terminal récepteur TRᵢ (ou le groupe de terminaux) désigné, et lui communique l'identifiant ITRᵢ (ou les identifiants) (sous-étape E21). Après vérification que l'identifiant ITRᵢ soit dans une liste de terminaux récepteurs prémémorisée, laquelle vérification peut être également effectuée dans le serveur de gestion, de manière à désigner un terminal récepteur compatible avec le serveur d'accueil adressé, le serveur d'accueil SAᵢ diffuse l'identifiant ITRᵢ de préférence avec une page d'accueil au terminal récepteur TRᵢ dans un canal de télédiffusion ou de radiodiffusion prévu à cet effet du réseau de diffusion RDᵢ. Le module RIM du terminal récepteur TRᵢ détecte l'identifiant ITRᵢ communiqué par le serveur SG via le serveur d'accueil SAᵢ afin que des données, telles que page d'accueil, soient affichées. Puis le serveur d'accueil invite le serveur de gestion à lire dans la table de serveurs de données et à lui communiquer la liste des noms et adresses ASDⱼ des serveurs de données SDⱼ pouvant communiquer avec le terminal récepteur désigné TRᵢ. Un message avec cette liste et l'identifiant ITRᵢ est alors diffusé (sous-étape E22), et le terminal TRᵢ affiche une page d'accueil du serveur de gestion avec la liste correspondante des noms des serveurs de données SDⱼ.

Un dialogue (sous-étape E23) s'instaure entre le désignateur DES et le serveur de gestion SG qui reporte sur l'écran du terminal récepteur TRᵢ l'index associé au moyen de désignation/sélection MDS dans le désignateur DES. Par exemple, en sélectionnant le nom d'un serveur de données, l'abonné accède à une page d'informations générales sur le serveur de données qui se termine par un choix entre la sélection du serveur de données ou le retour à la page de la liste des serveurs de données ou à la rupture de la communication.

Lorsque le désignateur DES est une "zapette" seulement dédiée à un unique service, un serveur de données pour ce service est d'office désigné à la sous-étape E23, et seulement l'adresse et le nom de ce serveur sont communiqués au terminal récepteur désigné TRᵢ à la sous-étape E23.

Selon une autre variante, les étapes E22 et E23 sont remplacées par une composition d'une adresse, qui peut être un numéro d'appel, du serveur de données souhaité SDⱼ.

Lorsque l'abonné n'est associé qu'à un seul serveur de données SDⱼ, celui-ci est d'office désigné par le serveur de gestion SG et les étapes E22 et E23 sont quasiment supprimées.

A l'**étape E3,** en réponse à la désignation du serveur de données SDⱼ depuis le désignateur DES, le serveur de gestion SG appelle le serveur de données prédéterminé ou désigné SDⱼ avec le numéro d'appel ASDⱼ pour établir via le réseau de télécommunication RT une communication avec le serveur de données SDⱼ (sous-étape E31). Lorsque le serveur de données SDⱼ est accessible par un point d'accès PAⱼ et un réseau de télécommunication RSⱼ, le serveur de gestion SG accède par des sous-adresses successives contenues dans l'adresse ASDⱼ aux diverses entités intermédiaires entre les serveurs SG et SDⱼ, comme par exemple dans une adresse selon le protocole internet IP contenant successivement les sous-adresses du point d'accès PAⱼ, d'une passerelle entre un réseau de téléinformatique et le réseau internet, et de plusieurs serveurs ou routeurs intermédiaires avant le serveur de données désigné SDⱼ.

En réponse à un message d'accusé de réception transmis par le serveur SDⱼ, le serveur de gestion SG aboute la communication entre le désignateur DES et le serveur SG et la communication entre le serveur SG et le serveur SDⱼ suivant le sens de voie "montante/retour" DES-vers-DSⱼ et aboute la communication entre le serveur SG et le serveur SDⱼ et la communication entre le serveur SG et le terminal récepteur prédéterminé ou désigné TRᵢ (ou le groupe prédéterminé ou désigné de terminaux récepteurs) suivant le sens de voie "descendante" SDⱼ-vers-TRᵢ (sous-étape E32). Le serveur de données SDⱼ signale alors au serveur de gestion SG qu'il est prêt à transmettre des messages au terminal récepteur TRᵢ.

Un dialogue est instauré entre le serveur de données SDⱼ d'une part et le désignateur DES et le terminal récepteur TRᵢ d'autre part à travers le serveur de gestion SG (sous-étape E33). L'abonné saisit et sélectionne avec le moyen MDS des requêtes interactives lues sur l'écran du terminal récepteur TRᵢ dans des zones réactives de menus proposés par le serveur de données ; en d'autres termes, l'abonné "navigue" sur l'écran du terminal récepteur TRᵢ avec le moyen MDS comme si le désignateur DES et le terminal récepteur constituait un seul équipement interactif avec le serveur de données SDⱼ. Le serveur de gestion SG lors de cette consultation adapte les requêtes et sélections du désignateur DES vers le serveur de données SDⱼ, et les données, pages ou modifications de page, du serveur de données SDⱼ vers le terminal récepteur TRᵢ. Particulièrement lorsque le serveur de données SDⱼ n'est pas un serveur multimédia, le serveur de gestion SG gère la consultation multimédia. Chaque message de données du serveur SDⱼ est encapsulé avec l'identifiant ITRᵢ du terminal récepteur TRᵢ dans le serveur de gestion SG afin d'être diffusé par le serveur d'accueil SAᵢ et reconnu par le terminal récepteur TRᵢ.

Le serveur de gestion traduit une position validée de l'index du moyen de désignation/sélection MD du désignateur DES en un message adapté au protocole du serveur de données SDⱼ et combine toute position au cours du déplacement de l'index dans une page correspondante transmise par le serveur de données pour transférer cette page avec l'index positionné au terminal récepteur TRᵢ.

Pour que le serveur de gestion SG, "collecteur" de voies montantes ou de retour depuis des désignateurs, associe le moyen de désignation/sélection MDS, tel que touche de navigation, souris ou joystick, avec n'importe quel type de format d'écran des terminaux récepteurs, tels que récepteur de télévision, récepteur audionumérique DAB ou borne réceptrice, le déplacement de l'index, flèche ou doigt ou curseur, du moyen MDS sur l'écran du terminal récepteur désigné TRᵢ est normalisé en fraction d'écran, c'est-à-dire en hauteur d'écran et en largeur d'écran. A partir de l'étape E2, le serveur de gestion SG adapte le déplacement de l'index du moyen de désignation/sélection MDS à l'écran du terminal récepteur désigné bien que ceux-ci ne soient pas reliés physiquement. Le moyen MDS en réponse à une interrogation du serveur de gestion SG communique la position de son index. Par exemple, lorsque le moyen de désignation/sélection MDS est une souris, les caractéristiques suivantes sont paramétrées, choisies, et téléchargées dans la souris suivant les applications associées : pas de déplacement, période avec laquelle la souris indique une nouvelle position, toutes les secondes par exemple, format ou protocole utilisé pour transmettre les coordonnées de positionnement d'index, positions prédéfinies.

Optionnellement, lorsque le terminal récepteur prédéterminé ou désigné TRᵢ est relié en local par la liaison infrarouge, radio ou filiaire LI (figure 2), au désignateur DES, la position variable de l'index du moyen désignation/sélection MDS lors de la navigation de celui-ci dès l'étape E2 est avantageusement transmise en local au terminal récepteur TRᵢ et seules les coordonnées correspondant à un choix validé de la position d'index du moyen de désignation/sélection MDS, tel que double cliquage avec une souris, sont transmises au serveur de gestion SG qui transfère, après adaptation, ce choix validé vers le serveur de données prédéterminé ou désigné SDⱼ. Le réseau notamment de radiotéléphonie au moins partiellement à bas débit entre le désignateur DES et le serveur de gestion SG est faiblement encombré puisque les coordonnées de déplacement d'index ne sont pas transmises. Le réseau à haut débit principalement entre le serveur de gestion SG et le serveur de données SDⱼ est également moins encombré puisque la visualisation de l'index validé, flèche ou doigt ou curseur, est gérée en local dans le terminal récepteur TRᵢ ; le réseau à haut débit ne convoie dans ce cas que des nouvelles informations "utiles" correspondant à des choix validés.

A l'**étape E4**, seulement à l'initiative de l'abonné, en sollicitant une touche spécifique par exemple, le désignateur DES demande la rupture de la communication bidirectionnelle avec le serveur de gestion SG qui rompt à son tour la communication bidirectionnelle avec le serveur de données SDⱼ et la communication bidirectionnelle avec le serveur d'accueil SAᵢ et monodirectionnelle vers le terminal TRᵢ ou le groupe de terminaux.

## Revendications

1. Procédé d'interactivité entre d'une part un dispositif radiotéléphonique mobile (DES) et un terminal récepteur (TRᵢ) et d'autre part un serveur de données (SDⱼ), à travers un réseau de télécommunication (RT) qui dessert un réseau de radiotéléphonie (RA) incluant le dispositif radiotéléphonique, un serveur d'accueil (SAᵢ) d'un réseau de diffusion (RDᵢ) incluant respectivement le terminal récepteur, et le serveur de données, **caractérisé par** les étapes suivantes :
- fournir un moyen de gestion (SG) desservi par le réseau de télécommunication (RT) pour établir des communications entre le dispositif radiotéléphonique, le terminal récepteur et le serveur de données,
- incorporer dans le terminal récepteur (TRᵢ) un moyen (RIM) pour détecter un identifiant (ITRᵢ) du terminal récepteur diffusé par le réseau de diffusion (RDᵢ) et pour reconnaître des données diffusées avec l'identifiant,
- appeler (E11, E12) le moyen de gestion (SG) depuis le dispositif radiotéléphonique (DES) afin d'établir une communication entre ceux-ci,
- appeler (E21) le serveur d'accueil (SAᵢ) depuis le moyen de gestion (SG) afin d'établir une communication entre ceux-ci et de diffuser (E22) l'identifiant (ITRᵢ) du terminal récepteur (TRᵢ), et
- appeler (E31) le serveur de données (SAⱼ) depuis le moyen de gestion (SG) afin d'établir une communication entre ceux-ci et l'abouter aux deux communications établies précédemment et afin de transmettre des données depuis le serveur de données vers le terminal récepteur.

2. Procédé conforme à la revendication 1 selon lequel, après l'établissement (E11, E12) de la communication entre le dispositif radiotéléphonique (DES) et le moyen de gestion (SG), l'identifiant (ITRᵢ) du terminal récepteur (TRᵢ) et une adresse (ATRᵢ) du serveur d'accueil (SAᵢ) sont composés dans le dispositif radiotéléphonique et sont transmis au moyen de gestion.

3. Procédé conforme à la revendication 1 selon lequel, après l'établissement (E11, E12) de la communication entre le dispositif radiotéléphonique (DES) et le moyen de gestion (SG), l'identifiant (ITRᵢ) du terminal récepteur (TRᵢ) est composé dans le dispositif radiotéléphonique et transmis au moyen de gestion, et le moyen de gestion (SG) lit en mémoire une adresse (ATRᵢ) du serveur d'accueil (SAᵢ) en réponse à l'identifiant (ITRᵢ) afin d'appeler (E21) le serveur d'accueil en lui transmettant l'adresse (ATRᵢ) et l'identifiant (ITRᵢ).

4. Procédé conforme à la revendication 1, comprenant après l'établissement (E11, E12) d'une communication entre le dispositif radiotéléphonique (DES) et le moyen de gestion (SG), une étape de désigner (E13) le terminal récepteur (TRᵢ) parmi plusieurs terminaux récepteurs (TR₁ - TR_{I}) depuis le dispositif radiotéléphonique (DES) au moyen de gestion (SG).

5. Procédé conforme à la revendication 4, comprenant les étapes de :
- préalablement mémoriser (E0) une liste de mots représentatifs (NTR₁-NTR_{I}) des terminaux récepteurs (TR₁ - TR_{I}) dans le dispositif radiotéléphonique (DES),
- préalablement mémoriser (E0) les mots représentatifs (NTRᵢ) en correspondance respectivement avec des adresses (ATRᵢ) de serveurs d'accueil (SAᵢ) et des identifiants (ITRᵢ) des terminaux récepteurs (TRᵢ) dans le moyen de gestion (SG), et
- lors de l'étape de désigner, désigner le mot représentatif (NTRᵢ) du terminal récepteur (TRᵢ) dans la liste mémorisée dans le dispositif radiotéléphonique (DES), transmettre (E13) le mot représentatif (NTRᵢ) du terminal récepteur désigné (TRᵢ) depuis le dispositif radiotéléphonique (DES), et lire (E14) l'adresse (ATRᵢ) du serveur d'accueil (SAᵢ) et l'identifiant (NTRᵢ) relatifs au terminal récepteur désigné dans le moyen de gestion (SG) en réponse au mot représentatif transmis (NTRᵢ).

6. Procédé conforme à la revendication 5, selon lequel l'étape de désigner (E13) comprend une sélection du mot représentatif (NTRᵢ) d'un terminal récepteur (TRᵢ) à désigner dans la liste des mots représentatifs de terminaux récepteurs.affichée dans le dispositif radiotéléphonique (DES), ou une sollicitation d'une touche (TDᵢ) du dispositif radiotéléphonique associée au terminal récepteur à désigner.

7. Procédé conforme à la revendication 4, comprenant les étapes de :
- préalablement mémoriser (E0) une liste de mots (NTR₁ - NTR_{I}) représentatifs des terminaux récepteurs (TR₁ - TR_{I}) en correspondance respectivement avec des adresses (ATRᵢ) des serveurs d'accueil (SAᵢ) et des identifiants (ITRᵢ) des terminaux récepteurs (TRᵢ) dans le moyen de gestion (SG), et
- lors de l'étape de désigner, transmettre la liste des mots représentatifs (NTRᵢ) depuis le serveur de gestion (SG) vers le dispositif radiotéléphonique (DES), désigner le mot représentatif du terminal récepteur dans la liste des mots représentatifs affichée dans le dispositif radiotéléphonique (DES), transmettre (E13) le mot représentatif (NTRᵢ) du terminal récepteur désigné (TR) depuis le dispositif radiotéléphonique (DES), et lire (E14) l'adresse (ATRᵢ) du serveur d'accueil (SAᵢ) et l'identifiant (NTRᵢ) relatifs au terminal récepteur désigné dans le moyen de gestion (SG) en réponse au mot représentatif transmis (NTRᵢ).

8. Procédé conforme à l'une quelconque des revendications 1 à 7, selon lequel ledit terminal récepteur (TRᵢ) est remplacé par un groupe de terminaux récepteurs vers lesquels des identifiants respectifs sont diffusés après l'étape d'appeler-le serveur d'accueil (SAᵢ), et des données sont transmises depuis le serveur de données (SDⱼ) vers les terminaux récepteurs du groupe après l'étape d'appeler le serveur de données.

9. Procédé conforme à l'une quelconque des revendications 1 à 8, selon lequel, après l'établissement (E11, E12) de la communication entre le dispositif radiotéléphonique (DES)-et le moyen de gestion (SG), une adresse (ASDⱼ) du serveur de données (SDⱼ) est composée dans le dispositif radiotéléphonique et transmise au moyen de gestion (SG) afin d'appeler le serveur de données.

10. Procédé conforme à l'une quelconque des revendications 1 à 9, comprenant après l'établissement (E21) de la communication entre le moyen de gestion (SG) et le serveur d'accueil (SAᵢ), une étape de désigner (E23) le serveur de données (SDⱼ) parmi une pluralité de serveurs de données prédéterminés (SD₁ - SD_{J}) depuis le dispositif radiotéléphonique (DES) au moyen de gestion (SG).

11. Procédé conforme à la revendication 10, comprenant les étapes de :
- préalablement mémoriser (E0) des mots représentatifs des serveurs de données (SD₁ - SD_{J}) en correspondance respectivement avec des adresses (ASDⱼ) des serveurs de données dans le moyen de gestion (SG), et
- pour l'étape de désigner le serveur de données, diffuser (E22) la liste des mots représentatifs des serveurs de données (SD₁ - SD_{J}) depuis le serveur de gestion (SG) vers le terminal récepteur (TRᵢ), afficher cette liste de mots dans le terminal récepteur, et désigner le mot représentatif du serveur de données (SDⱼ) dans la liste affichée depuis le dispositif radiotéléphonique (DES) au moyen de gestion (SG).

12. Procédé conforme à l'une quelconque des revendications 1 à 11, selon lequel, après la diffusion (E21) de l'identifiant (ITRᵢ) du terminal récepteur, le déplacement d'un index d'un moyen de désignation/sélection (MDS) inclus dans le dispositif radiotéléphonique (DES) est transmis depuis le dispositif radiotéléphonique (DES) au terminal récepteur (TRᵢ) à travers le moyen de gestion (SG), et une position de l'index validée dans le dispositif radiotéléphonique (DES) est transmise (E33) depuis le dispositif radiotéléphonique au serveur de données désigné (SDⱼ) à travers le moyen de gestion (SG).

13. Procédé conforme à l'une quelconque des revendications 1 à 11, selon lequel, après la diffusion (E21) de l'identifiant (ITRᵢ) du terminal récepteur, le déplacement d'un index d'un moyen de désignation/sélection (MDS) inclus dans le dispositif radiotéléphonique (DES) est transmis au terminal récepteur (TRᵢ) à travers une liaison bidirectionnelle (LI) entre le dispositif radiotéléphonique (DES) et le terminal récepteur (TRᵢ), et une position de l'index validée dans le dispositif radiotéléphonique (DES) est transmise depuis le dispositif radiotéléphonique vers le serveur de données (SDⱼ) à travers le moyen de gestion (SG).

14. Procédé conforme à la revendication 12 ou 13 lorsqu'elle dépend de la revendication 11, selon lequel une position de l'index validée sur le mot représentatif du serveur de données désigné (SDⱼ) dans la liste des mots affichée dans le terminal-récepteur (TRᵢ) est transmise depuis le dispositif radiotéléphonique (DES) au moyen de gestion (SG) afin que le moyen de gestion (SG) établisse la communication avec le serveur de données désigné (SDⱼ).

15. Procédé conforme à l'une quelconque des revendications 1 à 14, selon lequel le serveur de données (SDⱼ) est relié au réseau de télécommunication (RT) à travers un point d'accès (PAⱼ) et un réseau de transmission de données à débit élevé (RSⱼ).

16. Procédé conforme à l'une quelconque des revendications 1 à 15, selon lequel le réseau de diffusion incluant le terminal récepteur est de l'un des types suivants : réseau de diffusion ou de distribution de signaux de télévision numériques (RD₁), réseau de diffusion ou de distribution de signaux audionumériques (RD₂), réseau de diffusion ou de distribution de signaux télématiques ou multimédia (RD₃).

17. Système de télécommunication comprenant des moyens pour la mise en oeuvre du procédé d'interactivité conforme à l'une quelconque des revendications 1 à 16, dans lequel le dispositif radiotéléphonique comprend un moyen (SIM), de préférence amovible, ayant mémorisé un mot de marquage (MD) et le transmettant lors d'un appel (E11, E12) d'un moyen de gestion (SG) desservi par le réseau de télécommunication (RT) pour établir des communications entre le dispositif radiotéléphonique, le terminal récepteur et le serveur de données.

18. Système conforme à la revendication 17, dans lequel ledit moyen (SIM) a mémorisé plusieurs mots (NTRᵢ) représentatifs de terminaux récepteurs (TRᵢ) à désigner.

19. Système conforme à la revendication 17 ou 18, dans lequel le dispositif radiotéléphonique comprend des touches de désignation respectivement associées à des terminaux récepteurs, une touche de désignation (TDᵢ) étant sollicitée pour valider la désignation du terminal récepteur associé (TRᵢ) au moyen de gestion (SG).

20. Système conforme à l'une quelconque des revendications 17 à 19, dans lequel le dispositif radiotéléphonique comprend un clavier (CL) et/ou un écran (EC) et/ou un moyen de reconnaissance vocale, et/ou est relié à un terminal (TVT) dans lequel les fonctionnalités d'un clavier et/ou d'un écran sont déportées pour ledit dispositif (DES).

21. Système conforme à l'une quelconque des revendications 17 à 20, dans lequel le dispositif radiotéléphonique est intégré dans un terminal radiotéléphonique mobile connu.

## Claims

1. Interactive process between, on the one hand, a mobile radiotelephonic device (DES) and a receiver terminal (TRᵢ) and on the other hand a data server (SDⱼ), through a telecommunications network (RT) which serves a radiotelephony network (RA) including the radiotelephonic device, a gateway server (SAᵢ) of a broadcasting network (RDᵢ) including, respectively, the receiver terminal and the data server, **characterised by** the following steps:
- supplying a control unit (SG) served by the telecommunications network (RT) to establish communications between the radiotelephonic device, the receiver terminal and the data server,
- incorporating, in the receiver terminal (TRᵢ), means (RIM) for detecting an identifier (ITRᵢ) of the receiver terminal broadcast by the broadcasting network (RDᵢ) and for recognising data broadcast with the identifier,
- calling up (E11, E12) the control unit (SG) from the radiotelephonic device (DES) in order to establish communication between them,
- calling up (E21) the gateway server (SAᵢ) from the control unit (SG) in order to establish communication between them and broadcast (E22) the identifier (ITRᵢ) of the receiver terminal (TRᵢ), and
- calling up (E31) the data server (SAⱼ) from the control unit (SG) in order to establish communication between them and add it to the two communications established previously and in order to transmit data from the data server to the receiver terminal.

2. Process according to claim 1 wherein, after the establishing (E11, E12) of communications between the radiotelephonic device (DES) and the control unit (SG), the identifier (ITRᵢ) of the receiver terminal (TRᵢ) and an address (ATRᵢ) of the gateway server (SAᵢ) are dialled on the radiotelephonic device and transmitted to the control unit.

3. Process according to claim 1 wherein, after the establishing (E11, E12) of communications between the radiotelephonic device (DES) and the control unit (SG), the identifier (ITRᵢ) of the receiver terminal (TRᵢ) is dialled on the radiotelephonic device and transmitted to the control unit, and the control unit (SG) reads from its memory an address (ATRᵢ) of the gateway server (SAᵢ) in response to the identifier (ITRᵢ) in order to call up (E21) the gateway server by sending it the address (ATRᵢ) and the identifier (ITRᵢ).

4. Process according to claim 1, comprising, after the establishing (E11, E12) of communications between the radiotelephonic device (DES) and the control unit (SG), a step of designating (E13) the receiver terminal (TRᵢ) from among a plurality of receiver terminals (TR₁ - TR_{I}) from the radiotelephonic device (DES) to the control unit (SG).

5. Process according to claim 4, comprising the steps of:
- previously storing (E0) a list of words (NTR₁ - NTR_{I}) representing the receiver terminals (TR₁ - TR_{I}) in the radiotelephonic device (DES),
- previously storing (E0) the representative words (NTRᵢ) corresponding respectively to the addresses (ATRᵢ) of gateway servers (SAᵢ) and identifiers (ITRᵢ) of the receiver terminals (TRᵢ) in the control unit (SG), and
- during the designating step, designating the word (NTRᵢ) representing the receiver terminal (TRᵢ) from the list stored in the radiotelephonic device (DES), sending (E13) the word (NTRᵢ) representing the designated receiver terminal (TRᵢ) from the radiotelephonic device (DES), and reading (E14) the address (ATRᵢ) of the gateway server (SAᵢ) and the identifier (NTRᵢ) relating to the receiver terminal designated in the control unit (SG) in response to the representative word sent (NTRᵢ).

6. Process according to claim 5, wherein the designating step (E13) comprises selecting the word (NTRᵢ) representative of a receiver terminal (TRᵢ) to be designated from the list of words representing receiver terminals which is displayed in the radiotelephonic device (DES), or pressing a key (TDᵢ) on the radiotelephonic device associated with the receiver terminal to be designated.

7. Process according to claim 4, comprising the steps of:
- previously storing (E0) a list of words (NTR₁ - NTR_{I}) representing the receiver terminals (TR₁ - TR_{I}) corresponding respectively to addresses (ATRᵢ) of gateway servers (SAᵢ) and identifiers (ITRᵢ) of the receiver terminals (TRᵢ) in the control unit (SG), and
- during the designating step, sending the list of representative words (NTRᵢ) from the control device (SG) to the radiotelephonic device (DES), designating the word representing the receiver terminal from the list of representative words displayed in the radiotelephonic device (DES), sending (E13) the word (NTRᵢ) representing the designated receiver terminal (TR) from the radiotelephonic device (DES), and reading (E14) the address (ATRᵢ) of the gateway server (SAᵢ) and the identifier (NTRᵢ) relating to the receiver terminal designated in the control unit (SG) in response to the representative word sent (NTRᵢ).

8. Process according to any one of claims 1 to 7, wherein said receiver terminal (TRᵢ) is replaced by a group of receiver terminals to which the respective identifiers are broadcast after the step of calling the gateway server (SAᵢ), and data are sent from the data server (SDⱼ) to the receiver terminals of the group after the step of calling the data server.

9. Process according to any one of claims 1 to 8, wherein, after the establishing (E11, E12) of the communications between the radiotelephonic device (DES) and the control unit (SG), an address (ASDⱼ) of the data server (SDⱼ) is dialled on the radiotelephonic device and sent to the control unit (SG) in order to call up the data server.

10. Process according to any one of claims 1 to 9, comprising, after the establishing (E21) of the communications between the control unit (SG) and the gateway server (SAᵢ), a step of designating (E23) the data server (SDⱼ) from among a plurality of predetermined data servers (SD₁ - SD_{J}) from the radiotelephonic device (DES) to the control unit (SG).

11. Process according to claim 10, comprising the steps of:
- previously storing (E0) words representing the data servers (SD_{I} - SD_{J}) corresponding respectively to the addresses (ASDⱼ) of the data servers in the control unit (SG), and
- for the step of designating the data server, broadcasting (E22) the list of words representing the data servers (SD₁ - SD_{J}) from the control server (SG) to the receiver terminal (TRᵢ), displaying this list of words in the receiver terminal, and designating the word representing the data server (SDⱼ) from the list displayed from the radiotelephonic device (DES) to the control unit (SG).

12. Process according to any one of claims 1 to 11, wherein, after the broadcasting (E21) of the identifier (ITRᵢ) of the receiver terminal, the displacement of an index of a designating/selecting means (MDS) included in the radiotelephonic device (DES) is sent from the radiotelephonic device (DES) to the receiver terminal (TRᵢ) through the control unit (SG), and a position of the index validated in the radiotelephonic device (DES) is sent (E33) from the radiotelephonic device to the designated data server (SDⱼ) through the control unit (SG).

13. Process according to any one of claims 1 to 11, wherein, after the broadcasting (E21) of the identifier (ITRᵢ) of the receiver terminal, the displacement of an index of a designating/selecting means (MDS) included in the radiotelephonic device (DES) is sent to the receiver terminal (TRᵢ) through a two-way link (LI) between the radiotelephonic device (DES) and the receiver terminal (TRᵢ), and a position of the index validated in the radiotelephonic device (DES) is sent from the radiotelephonic device to the data server (SDⱼ) through the control unit (SG).

14. Process according to claim 12 or 13 when dependent on claim 11, wherein a position of the index validated on the word representing the data server (SDⱼ) designated in the list of words which is displayed in the receiver terminal (TRᵢ) is sent from the radiotelephonic device to the control unit (SG) so that the control unit (SG) can establish communication with the designated data server (SDⱼ).

15. Process according to any one of claims 1 to 14, wherein the data server (SDⱼ) is connected to the telecommunications network (RT) via a gateway point (PAⱼ) and a high-speed data transmission network (RSⱼ).

16. Process according to any one of claims 1 to 15, wherein the broadcasting network including the receiver terminal is of one of the following types: digital television signal broadcasting or distribution network (RD₁), digital audio signal broadcasting or distribution network (RD₂), telematic or multimedia signal broadcasting or distribution network (RD₃).

17. Telecommunications system comprising means for carrying out the interactive process according to any one of claims 1 to 16, wherein the radiotelephonic device comprises a device (SIM), which is preferably removable, in which is stored a marker word (MD), and which sends it when called up (E11, E12) by a control unit (SG) served by the telecommunications network (RT) to establish communications between the radiotelephonic device, the receiver terminal and the data server.

18. System according to claim 17, wherein said device (SIM) has stored in it a plurality of words (NTRᵢ) representing receiver terminals (TRᵢ) to be designated.

19. System according to claim 17 or 18, wherein the radiotelephonic device comprises designation keys associated respectively with receiver terminals, one designation key (TDᵢ) being pressed in order to validate the designation of the associated receiver terminal (TRᵢ) to the control unit (SG).

20. System according to any one of claims 17 to 19, wherein the radiotelephonic device comprises a keypad (CL) and/or a screen (EC) and/or voice recognition means, and/or is connected to a terminal (TVT) into which the functions of a keypad and/or screen are transferred for said device (DES).

21. System according to any one of claims 17 to 20, wherein the radiotelephonic device is integrated in a known mobile radiotelephonic terminal.

## Patentansprüche

1. Dialogverfahren zwischen einerseits einer Mobilfunktelephoneinrichtung (DES) und einem Empfangsendgerät (TRᵢ) und andererseits einem Datenserver (SDⱼ) durch ein Fernmeldenetz (RT), das ein Funktelephonnetz (RA), dem die Funktelephoneinrichtung angehört, versorgt, einen Empfangshost (SAᵢ) eines Verteilnetzes (RDᵢ), dem das Empfangsendgerät entsprechend angehört, und den Datenserver, **gekennzeichnet durch** die folgenden Schritte:
- Bereitstellung eines **durch** das Fernmeldenetz (RT) versorgten Steuerungsmittels (SG) zur Herstellung von Verbindungen zwischen der Funktelephoneinrichtung, dem Empfangsendgerät und dem Datenserver,
- Einbau ins Empfangsendgerät (TRᵢ) eines Mittels (RIM) zur Feststellung einer Kennung (ITRᵢ) des Empfangsendgerätes, die vom Verteilnetz (RDᵢ) gesendet wird, und zur Erkennung der Daten, die mit der Kennung gesendet werden,
- Anrufen (E11, E12) des Steuerungsmittels (SG) von der Funktelephoneinrichtung (DES) aus, um eine Verbindung zwischen diesen herzustellen,
- Anrufen (E21) des Empfangshosts (SAᵢ) vom Steuerungsmittel (SG) aus, um eine Verbindung zwischen diesen herzustellen und die Kennung (ITRᵢ) des Empfangsendgerätes (TRᵢ) zu senden (E22), und
- Anrufen (E31) des Datenservers (SDⱼ) vom Steuerungsmittel (SG) aus, um eine Verbindung zwischen diesen herzustellen und sie an die beiden vorher hergestellten Verbindungen anzuschließen, und um Daten vom Datenserver zum Empfangsendgerät zu übertragen.

2. Verfahren nach Patentanspruch 1, in dem nach Herstellung (E11, E12) der Verbindung zwischen der Funktelephoneinrichtung (DES) und dem Steuerungsmittel (SG) die Kennung (ITRᵢ) des Empfangsendgerätes (TRᵢ) und eine Adresse (ATRᵢ) des Empfangshosts (SAᵢ) in die Funktelephoneinrichtung eingegeben und an das Steuerungsmittel übermittelt werden.

3. Verfahren nach Patentanspruch 1, in dem nach Herstellung (E11, E12) der Verbindung zwischen der Funktelephoneinrichtung (DES) und dem Steuerungsmittel (SG) die Kennung (ITRᵢ) des Empfangsendgerätes (TR_{I}) in die Funktelephoneinrichtung eingegeben und dem Steuerungsmittel übermittelt wird und das Steuerungsmittel (SG) in Reaktion auf die Kennung (ITRᵢ) im Speicher eine Adresse (ATRᵢ) des Empfangshosts (SAᵢ) liest, um den Empfangshost anzurufen (E21), wobei ihm die Adresse (ATRᵢ) und die Kennung ITRᵢ) übermittelt werden.

4. Verfahren nach Patentanspruch 1, nach Herstellung (E11, E12) einer Verbindung zwischen der Funktelephoneinrichtung (DES) und dem Steuerungsmittel (SG) einen Schritt (E13) umfassend, in dem dem Steuerungsmittel (SG) von der Funktelephoneinrichtung (DES) aus das Empfangsendgerät (TRᵢ) aus mehreren Empfangsendgeräten (TR₁ - TR_{I}) benannt wird.

5. Verfahren nach Patentanspruch 4, die folgenden Schritte umfassend:
- vorab eine Liste von Wörtern (NTR₁ - NTR_{I}), die das Empfangsendgerät (TR₁ - TR_{I}) bezeichnen, in der Funktelephoneinrichtung zu speichern (E0),
- vorab die bezeichnenden Wörter (NTRᵢ) jeweils in Verbindung mit der Adresse (ATRᵢ) eines Empfangshosts (SAᵢ) und mit der Kennung (ITRᵢ) eines Empfangsendgerätes (TRᵢ) im Steuerungsmittel (SG) zu speichern, und
- im Benennungsschritt das Wort (NTRᵢ), das das Empfangsendgerät (TRᵢ) in der in der Funktelephoneinrichtung (DES) gespeicherten Liste bezeichnet, benennen, das dem benannten Empfangsendgerät (TRᵢ) entsprechende Wort (NTRᵢ) von der Funktelephoneinrichtung (DES) aus zu übertragen (E13) und in Reaktion auf das übermittelte bezeichnende Wort (NTRᵢ) die dem benannten Empfangsendgerät entsprechende Adresse (ATRᵢ) des Empfangshosts (SAᵢ) und Kennung (ITRᵢ) im Steuerungsmittel (SG) zu lesen (E14).

6. Verfahren nach Patentanspruch 5, in dem der Benennungsschritt (E13) eine Auswahl des einem zu benennenden Empfangsendgerät (TRᵢ) entsprechenden Wortes (NTRᵢ) in der Liste der Wörter, die Empfangsgeräte bezeichnen, die in der Funktelephoneinrichtung (DES) angezeigt wird, umfasst, oder die Betätigung einer Taste (TDᵢ) der Funktelephoneinrichtung, die dem zu benennenden Empfangsendgerät zugeordnet ist.

7. Verfahren nach Patentanspruch 4, die folgenden Schritte umfassend:
- vorab eine Liste von Wörtern (NTR₁ - NTR_{I}), die die Empfangsendgeräte (TR₁ - TR_{I}) bezeichnen, jeweils in Verbindung mit einer Adresse (ATRᵢ) eines Empfangshosts (SAᵢ) und mit eioner Kennung (ITRᵢ) des Empfangsendgerätes (TRᵢ) im Steuerungsmittel (SG) zu speichern (E0), und
- im Benennungsschritt die Liste der bezeichnenden Wörter (NTRᵢ) vom Steuerungsmittel (SG) an die Funktelephoneinrichtung (DES) zu übermitteln, das Wort, das das Empfangsendgerät in der in der Funktelephoneinrichtung (DES) angezeigten Liste bezeichnet, benennen, das dem benannten Empfangsendgerät (TRᵢ) entsprechende Wort (NTRᵢ) von der Funktelephoneinrichtung (DES) aus zu übertragen (E13) und in Reaktion auf das übermittelte bezeichnende Wort (NTRᵢ) die dem benannten Empfangsendgerät entsprechende Adresse (ATRᵢ) des Empfangshosts (SAᵢ) und Kennung (ITRᵢ) im Steuerungsmittel (SG) zu lesen (E14).

8. Verfahren nach irgendeinem der Patentansprüche 1 bis 7, in dem das genannte Empfangsendgerät (TRᵢ) durch eine Gruppe von Empfangsendgeräten ersetzt ist, an die nach dem Schritt des Anrufens des Empfangshosts (SAᵢ) entsprechende Kennungen gesendet werden und nach dem Schritt des Anrufens des Datenservers vom Datenserver (SDⱼ) an die Empfangsendgeräte der Gruppe Daten übertragen werden.

9. Verfahren nach irgendeinem der Patentansprüche 1 bis 8, in dem nach Herstellung (E11, E12) der Verbindung zwischen der Funktelephoneinrichtung (DES) und dem Steuerungsmittel (SG) eine Adresse (ASDⱼ) des Datenservers (SDⱼ) in die Funktelephoneinrichtung eingegeben und dem Steuerungsmittel (SG) übermittelt wird, um den Datenserver anzurufen.

10. Verfahren nach irgendeinem der Patentansprüche 1 bis 9, das nach Herstellung (E21) der Verbindung zwischen dem Steuerungsmittel (SG) und dem Empfangshost (SAᵢ) einen Schritt (E23) umfasst, in dem von der Funktelephoneinrichtung (DES) aus dem Steuerungsmittel (SG) der Datenserver (SDⱼ) aus mehreren vorher festgelegten Datenservern (SD₁ - SD_{J}) benannt wird.

11. Verfahren nach Patentanspruch 10, die folgenden Schritte umfassend:
- vorab Wörter, die Datenserver (SD₁ - SD_{J}) bezeichnen, jeweils in Verbindung mit Adressen (ASDⱼ) der Datenserver im Steuerungsmittel (SG) zu speichern (E0), und
- für den Schritt der Benennung des Datenservers die Liste der Wörter, die die Datenserver (SD₁ - SD_{J}) bezeichnen, vom Steuerungsmittel (SG) zum Empfangsendgerät (TRᵢ) zu senden (E22), diese Wörterliste im Empfangsendgerät anzuzeigen und das Wort in der angezeigten Liste, das den Datenserver (SDⱼ) bezeichnet, von der Funktelephoneinrichtung (DES) aus dem Steuerungsmittel (SG) zu bennen.

12. Verfahren nach irgendeinem der Patentansprüche 1 bis 11, in dem nach Sendung (E21) der Kennung (ITRᵢ) des Empfangsendgerätes die Bewegung eines Zeigers eines in der Funktelephoneinrichtung enthaltenen Benennungs-/Auswahlmittels (MDS) von der Funktelephoneinrichtung (DES) aus durch das Steuerungsmittel (SG) an das Empfangsendgerät (TRᵢ) gesendet wird und eine in der Funktelephoneinrichtung (DES) bestätigte Stellung des Zeigers von der Funktelephoneinrichtung aus durch das Steuerungsmittel (SG) an den benannten Datenserver (SDⱼ) übermittelt wird (E33).

13. Verfahren nach irgendeinem der Patentansprüche 1 bis 11, in dem nach Sendung (E21) der Kennung (ITRᵢ) des Empfangsendgerätes die Bewegung eines Zeigers eines in der Funktelephoneinrichtung (DES) enthaltenen Benennungs-/Auswahlmittels (MDS) durch eine bidirektionale Verbindung (LI) zwischen der Funktelephoneinrichtung (DES) und dem Empfangsendgerät (TRᵢ) an das Empfangsendgerät (TRᵢ) gesendet wird und eine in der Funktelephoneinrichtung (DES) bestätigte Stellung des Zeigers von der Funktelephoneinrichtung aus durch das Steuerungsmittel (SG) an den Datenserver (SDⱼ) übermittelt wird.

14. Verfahren nach Patentanspruch 12 oder 13, wenn er von Patentanspruch 11 abhängt, in dem eine bestätigte Stellung des Zeigers auf dem Wort, das in der im Empfangsendgerät (TRᵢ) angezeigten Liste den benannten Datenserver (SDⱼ) bezeichnet, von der Funktelephoneinrichtung (DES) aus an das Steuerungsmittel (SG) übermittelt wird, damit das Steuerungsmittel (SG) die Verbindung mit dem benannten Datenserver (SDⱼ) herstellt.

15. Verfahren nach irgendeinem der Patentansprüche 1 bis 14, in dem der Datenserver (SDⱼ) über einen Zugangspunkt (PAⱼ) und ein Datenübertragungsnetz mit hoher Übertragungsrate (RSⱼ) mit dem Fernmeldenetz (RT) verbunden ist.

16. Verfahren nach irgendeinem der Patentansprüche 1 bis 15, in dem das Verteilnetz, zu dem das Empfangsendgerät gehört, einer der folgenden Arten ist: Sende- oder Verteilnetz für digitale Fernsehsignale (RD₁), Sende- oder Verteilnetz für digitale Audiosignale (RD₂), Sende- oder Verteilnetz für Teleinformatik- oder Multimediasignale (RD₃).

17. Fernmeidesystem, Mittel zur Ausführung des Dialogverfahrens nach irgendeinem der Patentansprüche 1 bis 16 umfassend, in dem die Funktelephoneinrichtung ein vorzugsweise entfernbares Mittel (SIM) enthält, in dem ein Markierungswort (MD) gespeichert ist, das bei einem Anruf (E11, E12) eines vom Fernmeldenetz (RT) versorgten Steuerungsmittels (SG) übermittelt wird, um Verbindungen zwischen der Funktelephoneinrichtung, dem Empfangsendgerät und dem Datenserver herzustellen.

18. System nach Patentanspruch 17, in dem in dem genannten Mittel (SIM) mehrere Wörter (NTRᵢ) gespeichert sind, die zu benennende Empfangsendgeräte (TRᵢ) bezeichnen.

19. System nach Patentanspruch 17 oder 18, in dem die Funktelephoneinrichtung Benennungstasten aufweist, die jeweils Empfangsendgeräten zugeordnet sind, wobei eine Benennungstaste (TDᵢ) betätigt wird, um dem Steuerungsmittel (SG) die Benennung des zugehörigen Empfangsendgerätes (TRᵢ) zu bestätigen.

20. System nach irgendeinem der Patentansprüche 17 bis 19, in dem die Funktelephoneinrichtung eine Tastatur (CL) und/oder einen Bildschirm (EC) und/oder ein Mittel zur Spracherkennung enthält und/oder mit einer Endeinrichtung (TVT) verbunden ist, auf die für die genannte Einrichtung (DES) die Funktionen einer Tastatur und/oder eines Bildschirms übertragen sind.

21. System nach irgendeinem der Patentansprüche 17 bis 20, in dem die Funktelephoneinrichtung in ein bekanntes Mobiltelephongerät eingebaut ist.
